# EUROPÄISCHE PATENTSCHRIFT

(11) **EP 3 477 198 B1**
(45) Veröffentlichungstag und Bekanntmachung des Hinweises auf die Patenterteilung: **01.04.2020**
(21) Anmeldenummer: 18202472.9
(22) Anmeldetag: 25.10.2018
(51) Int. Cl.: F23J 15/06, F24H 8/00, F24D 12/02, F28D 7/02, F28D 21/00, F28F 1/08

(54) **HEIZKESSEL**
BOILER
CHAUDIÈRE

(30) Priorität: 25.10.2017 AT 509002017
(43) Veröffentlichungstag der Anmeldung: 01.05.2019
(73) Patentinhaber: Hargassner Ges mbH, 4952 Weng/Innkreis (AT)
(72) Erfinder: Hargassner, Markus, 4952 Weng im Innkreis (AT)
(74) Vertreter: Hübscher & Partner Patentanwälte GmbH

(56) Entgegenhaltungen:
- EP-A1- 1 619 445
- EP-A1- 2 745 913
- EP-A2- 1 130 327
- WO-A2-2010/075601
- DE-A1- 3 519 315
- DE-A1- 10 334 754
- DE-U1- 29 909 521

## Beschreibung

Die Erfindung bezieht sich auf einen Heizkessel mit einem Saugzuggebläse für die Abgase, die einen im Kesselgehäuse angeordneten Wärmetauscher für einen Wärmeträger und einen diesem Wärmetauscher nachgeschalteten Kondensationswärmetauscher außerhalb des Kesselgehäuses beaufschlagen, der ein Gehäuse mit einer einen abwärts gerichteten Einströmabschnitt und einen vom Einströmabschnitt durch eine Trennwand getrennten, aufwärts gerichteten Ausströmabschnitt bildenden, von einer Wärmeträgerführung durchsetzten Abgasführung umfasst.

Um die latente Wärme der Abgase von mit Festbrennstoffen beheizbaren Heizkesseln vorteilhaft nützen zu können, ist es bekannt (WO 2010/075601 A2) zwischen dem Wärmetauscher des Heizkessels und dem nachgeordneten Saugzuggebläse einen Kondensationswärmetauscher für die abgekühlten, feuchten Abgase außerhalb des Kesselgehäuses vorzusehen, sodass die Grundkonstruktion des Heizkessels beibehalten werden kann. Die durch den Wärmeaustausch im Heizkessel auf eine Temperatur wenig oberhalb des Taupunkts abgekühlten Abgase bedingen für den Kondensationswärmetauscher vergleichsweise einfache Konstruktionsvoraussetzungen, weil lediglich der in den Abgasen enthaltene Dampf zu kondensieren ist. Nachteilig ist allerdings der mit einem entsprechenden Bauaufwand verbundene Aufbau des Kondensationswärmetauschers, der ein im Querschnitt rechtwinkeliges Gehäuse umfasst, das durch eine mittige Trennwand in einen abwärts gerichteten Einströmabschnitt und einen aufwärts gerichteten Ausströmabschnitt für das Abgas unterteilt ist. Sowohl der Einströmabschnitt als auch der Ausströmabschnitt werden durch quer zur Abgasströmung parallel zur Trennwand verlaufende Wärmeträgerrohre durchsetzt, die zwischen einander bezüglich des Einström- bzw. Ausströmabschnitts gegenüberliegenden Verteiler- und Sammelkammern für einen Wärmeträger, insbesondere Wasser, vorgesehen sind. Außerdem ist eine Nachrüstung eines bestehenden Heizkessels schwierig, weil der Kondensationswärmetauscher in Strömungsrichtung vor dem Saugzuggebläse in die Abgasführung eingebunden werden muss.

Der Erfindung liegt die Aufgabe zugrunde, den Kondensationswärmetauscher eines Heizkessels der eingangs geschilderten Art so auszugestalten, dass er nicht nur einfach aufgebaut ist, sondern auch ohne besonderen Aufwand an den Heizkessel angebaut werden kann.

Ausgehend von einem Heizkessel der eingangs geschilderten Art löst die Erfindung die gestellte Aufgabe dadurch, dass das Gehäuse des dem Saugzuggebläse nachgeordneten Kondensationswärmetauschers einen den Einströmabschnitt ergebenden Ringraum zwischen einem zylindrischen Außenmantel und einem zum Außenmantel koaxialen, den Ausströmabschnitt bildenden Steigrohr aufweist und dass die Wärmeträgerführung eine im Einströmabschnitt zwischen Außenmantel und Steigrohr verlaufendes Wärmeträgerrohr umfasst, das das Steigrohr schraubenförmig in einem absteigenden und einem daran anschließenden aufsteigenden Ast umschließt.

Durch die Anordnung des Kondensationswärmetauschers in Strömungsrichtung des Abgases nach dem Saugzuggebläse ergeben sich einfache Voraussetzungen für den Anschluss des Kondensationswärmetauschers an einen Heizkessel, weil der Kondensationswärmetauscher nicht auf der Saugseite des Saugzuggebläses in die Abgasführung eingebunden werden muss, sondern lediglich druckseitig an das Saugzuggebläse anzuschließen ist. Die dem Saugzuggebläse nachgeordnete Anordnung des Kondensationswärmetauschers stellt außerdem sicher, dass der Taupunkt des Abgasstroms nicht im Bereich des Saugzuggebläses unterschritten wird, sodass das Gehäuses des Saugzuggebläses nicht aus einem korrosionsbeständigen Stahl gefertigt sein muss.

bei diese entlang gegensinniger Schraubenlinien um eine gemeinsame Schraubungsachse verlaufenden Äste das mittige Steigrohr des Gehäuses umschließen, kann für die abwärts gerichtete Abgasströmung im Ringraum zwischen dem zylindrischen Außenmantel und dem mittigen Steigrohr aufgrund der Wärmeträgerführung eine vergleichsweise große Wärmetauscherfläche zur Verfügung gestellt werden, die für eine vollständige Kondensation des im Abgasstrom enthaltenen Dampfs im Bereich des abwärts gerichteten Einströmabschnitts der Abgasführung sorgt, sodass im aufwärts gerichteten Ausströmabschnitt, also im Steigrohr, kein Kondensat mehr anfällt. Das im abwärts gerichteten Einströmabschnitt anfallende Kondensat kann im Bodenbereich des Gehäuses gesammelt und ausgetragen werden, wobei das entlang des Wärmeträgerrohrs nach unten fließende Kondensat eine Selbstreinigungswirkung mit sich bringt. Die Abgasführung im Ringraum zwischen Außenmantel und Steigrohr stellt trotz des in zwei konzentrischen, gegensinnigen Gewindelinien verlaufenden Wärmeträgerrohrs geringe Abgasdruckverluste sicher, sodass beim Nachrüsten von Heizkesseln mit Kondensationswärmetauschern dieser Art das Saugzuggebläse nicht überlastet wird.

Damit hinsichtlich der Anschlüsse für die Zu- und Abführung des Wärmeträgers sowie für die Weiterführung der trockenen Abgase vorteilhafte Konstruktionsbedingungen sichergestellt werden können, können in der Decke des Gehäuses Vor- und Rücklaufanschlüsse für das Wärmeträgerrohr sowie ein Abgasauslass für das Steigrohr vorgesehen sein, sodass alle erforderlichen Anschlüsse im Deckelbereich des Gehäuses zusammengefasst sind.

Ist das Wärmeträgerrohr als Wellrohr ausgebildet, so kann die gesamte Wärmetauscherfläche zusätzlich vergrößert und damit die Bedingungen für die Abgaskondensation im Bereich des Einströmabschnitts verbessert werden.

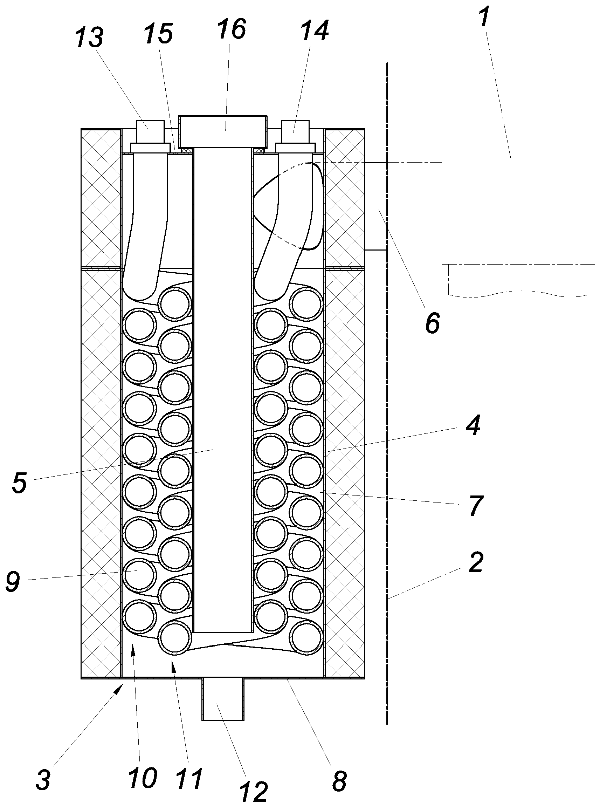

In der Zeichnung ist der Erfindungsgegenstand beispielsweise dargestellt, und zwar wird ein erfindungsgemäßer Kondensationswärmetauscher in einem schematischen Axialschnitt gezeigt.

Der an die Druckseite eines Saugzuggebläses 1 eines lediglich strichpunktiert angedeuteten Heizkessels 2 angeschlossene Kondensationswärmetauscher weist ein Gehäuse 3 auf, das einen wärmegedämmten, zylindrischen Außenmantel 4 und ein zu diesem Außenmantel 4 koaxiales Steigrohr 5 umfasst, sodass die durch eine an das Saugzuggebläse 1 angeschlossene Druckleitung 6 tangential in den Ringraum 7 zwischen Außenmantel 4 und Steigrohr 5 strömenden Abgase in diesem einen Einströmabschnitt bildendenden Ringraum 7 abwärts strömen, im Bereich des Gehäusebodens 8 umgelenkt und durch das Steigrohr 5, das einen Ausströmabschnitt der Abgasführung bildet, aus dem Kondensationswärmetauscher austreten.

Im Ringraum 7 ist ein Wärmeträgerrohr 9 vorgesehen, das einen in mehreren Windungen schraubenlinienförmig abwärts führenden Ast 10 und einen daran anschließenden aufwärts führenden Ast 11 aufweist, der entlang einer gegensinnigen, gleichachsigen Schraubenlinie verläuft. Die Windungen des Astes 10 umschließen daher die Windungen des Astes 11, wobei das Abgas zwischen den Windungen der Äste 10 und 11 durch den Ringraum 7 nach unten strömt, unter Wärmeabgabe an den durch das Wärmeträgerrohr 9 fließenden Wärmeträger, üblicherweise Wasser, abgekühlt wird und dabei kondensiert. Das Kondensat fließt aus einem durch einen Siphon abgeschlossenen Bodenauslass 12 aus dem Gehäuse 3.

Die Anschlüsse 13 und 14 für den Zu- und Ablauf des Wärmeträgers sind auf der Decke 15 des Gehäuses 3 neben dem die Decke 15 ebenfalls durchsetzenden Abgasauslass 16 des Steigrohrs 5 vorgesehen, sodass sich einfache Anschlussbedingungen für den Wärmeträger und die Zu- und Abführung des Abgases im Bereich der Decke 15 des Gehäuses 3 ergeben.

## Patentansprüche

1. Heizkessel (2) mit einem Saugzuggebläse (1) für die Abgase, die einen im Kesselgehäuse angeordneten Wärmetauscher für einen Wärmeträger und einen diesem Wärmetauscher nachgeschalteten Kondensationswärmetauscher außerhalb des Kesselgehäuses beaufschlagen, der ein Gehäuse (3) mit einer einen abwärts gerichteten Einströmabschnitt und einen vom Einströmabschnitt durch eine Trennwand getrennten, aufwärts gerichteten Ausströmabschnitt bildenden, von einer Wärmeträgerführung durchsetzten Abgasführung umfasst, **dadurch gekennzeichnet, dass** das Gehäuse (3) des dem Saugzuggebläse (1) nachgeordneten Kondensationswärmetauschers einen den Einströmabschnitt ergebenden Ringraum (7) zwischen einem zylindrischen Außenmantel (4) und einem zum Außenmantel (4) koaxialen, den Ausströmabschnitt bildenden Steigrohr (5) aufweist und dass die Wärmeträgerführung ein im Einströmabschnitt zwischen Außenmantel (4) und Steigrohr (5) verlaufendes Wärmeträgerrohr (9) umfasst, das das Steigrohr (5) schraubenförmig in einem absteigenden und einem daran anschließenden aufsteigenden Ast (10, 11) umschließt.

2. Heizkessel (2) nach Anspruch 1, **dadurch gekennzeichnet, dass** in der Decke (15) des Gehäuses (3) Vor- und Rücklaufanschlüsse (13, 14) für das Wärmeträgerrohr (9) sowie ein Abgasauslass (16) für das Steigrohr (5) vorgesehen sind.

3. Heizkessel (2) nach Anspruch 1 oder 2, **dadurch gekennzeichnet, dass** das Wärmeträgerrohr (9) als Wellrohr ausgebildet ist.

## Claims

1. Boiler (2) having a suction fan (1) for the exhaust gases which act upon a heat exchanger arranged in the boiler housing for a heat transfer medium and a condensation heat exchanger connected downstream of this heat exchanger outside of the boiler housing, which condensation heat exchanger has a housing (3) having an exhaust gas duct through which a heat transfer medium duct passes and which forms a downwardly directed inflow section and an upwardly directed outflow section separated from the inflow section by a partition wall, **characterised in that** the housing (3) of the condensation heat exchanger arranged downstream of the suction fan (1) comprises an annular chamber (7) producing the inflow section between a cylindrical outer jacket (4) and a riser pipe (5) coaxial to the outer jacket (4) and forming the outflow section, and **in that** the heat transfer medium duct includes a heat transfer medium pipe (9) extending in the inflow section between the outer jacket (4) and the riser pipe (5) and surrounding the riser pipe (5) in a helical manner in a descending branch (10) and an ascending branch (11) connected thereto.

2. Boiler (2) as claimed in claim 1, **characterised in that** feed and return connectors (13, 14) for the heat transfer medium pipe (9) and an exhaust gas outlet (16) for the riser pipe (5) are provided in the top (15) of the housing (3).

3. Boiler (2) as claimed in claim 1 or 2, **characterised in that** the heat transfer medium pipe (9) is formed as a corrugated pipe.

## Revendications

1. Chaudière (2) dotée d'un ventilateur d'extraction (1) pour les gaz d'échappement qui atteignent un échangeur de chaleur situé dans la carcasse de la chaudière servant pour un fluide caloporteur et un échangeur de chaleur par condensation situé à l'extérieur de la carcasse de la chaudière, en aval de cet échangeur de chaleur, lequel comprend une enveloppe (3) avec une conduite d'évacuation des gaz formant une section d'admission orientée vers le bas et une section d'évacuation orientée vers le haut séparée de la section d'admission par une cloison de séparation et traversée par une conduite de fluide caloporteur, **caractérisée en ce que** l'enveloppe (3) de l'échangeur de chaleur par condensation en aval du ventilateur d'extraction (1) possède un espace annulaire constituant la section d'admission entre une enveloppe extérieure cylindrique (4) et un tube ascendant (5) formant la section d'évacuation coaxiale avec l'enveloppe extérieure (4) et **en ce que** la conduite de fluide caloporteur comprend un tube de fluide caloporteur (9) courant dans la section d'admission entre l'enveloppe extérieure (4) et le tube ascendant (5) qui entoure le tube ascendant (5) hélicoïdalement dans une branche descendante et une branche ascendante (10, 11) raccordée à celle-ci.

2. Chaudière (2) selon la revendication 1, **caractérisée en ce que** dans le couvercle (15) de l'enveloppe (3) sont prévus des raccords d'aller et de retour (13, 14) pour le tube de fluide caloporteur (9) ainsi qu'une évacuation de gaz d'échappement (16) pour le tube ascendant (5).

3. Chaudière (2) selon la revendication 1 ou 2, **caractérisée en ce que** le tube de fluide caloporteur (9) est configuré comme un tube ondulé.
